# DEMANDE DE BREVET EUROPEEN

(11) **EP 1 621 408 A1**
(43) Date de publication de la demande: **01.02.2006**
(21) Numéro de dépôt: 05291579.0
(22) Date de dépôt: 22.07.2005
(51) Int. Cl.: B60R 13/08, D04H 1/54, D04H 13/00

(54) **Procédé de réalisation d'un matelas de masse volumique prédéfinie en deux étapes de thermoliage**

(30) Priorité: 30.07.2004 FR 0451733
(71) Demandeur: Centre d'etude et de recherche pour l'automobile (CERA), 51100 Reims (FR)
(72) Inventeur: Loiseau, Philippe, 51100 Reims (FR); Ansel, Patrick, 51360 Beaumont sur Vesle (FR); Descamps, Jean-François, 51380 Villers Marmery (FR)
(74) Mandataire: Breese Derambure Majerowicz

(57) **Abrégé**

L'invention concerne un procédé de réalisation d'un matelas (1) comprenant une couche fibreuse thermo-liée, ledit procédé prévoyant un formage de ladite couche en deux étapes au moyen d'une première (4) et d'une deuxième (2) cavités formées en regard d'une même matrice (7), le volume de ladite deuxième cavité étant inférieur à celui de ladite première cavité et sa géométrie correspondant à celle du matelas (1) à obtenir, ledit procédé comprenant les étapes suivantes :
- remplir la première cavité (4) avec un mélange de matériaux fibreux (5) de sorte à conférer audit mélange une pré-géométrie ;
- thermo-lier partiellement ledit mélange de matériaux fibreux ;
- former la deuxième cavité (2) ;
- achever le thermo-liage dudit mélange de matériaux fibreux, ledit mélange occupant sensiblement le volume de ladite deuxième cavité, de sorte à obtenir un matelas (1) à la géométrie souhaitée.

## Description

L'invention concerne un procédé de réalisation d'un matelas de géométrie non plane comprenant une couche fibreuse thermo-liée.

Les matelas réalisés par un tel procédé peuvent être utilisés par exemple à des fins d'insonorisation ou pour réaliser des matelassures de sièges ou de couchage.

II est connu de réaliser des matelas d'insonorisation, notamment pour véhicules automobiles, à base de fibres, en particulier sous forme de feutres présentant une géométrie non plane et une épaisseur variable, de sorte à les incorporer dans les véhicules automobiles en tenant compte de leur propre géométrie.

De tels matelas peuvent par exemple être disposés sur le sol ou sur le tablier du véhicule, c'est à dire la paroi métallique séparant le compartiment moteur de l'habitacle.

Ils comprennent généralement, outre la couche fibreuse, une couche dense, ou masse lourde, l'ensemble formant, du fait de l'élasticité de la couche fibreuse, un système masse-ressort présentant des propriétés d'isolation acoustique.

La couche dense peut présenter une porosité agencée de sorte à conférer en outre au système des propriétés d'absorption acoustique.

En variante, en vue d'un résultat similaire, la couche dense peut être étanche et revêtue d'une couche poreuse disposée à l'opposé de la couche fibreuse.

Dans certaines applications, le matelas peut ne comprendre qu'une couche fibreuse, ceci à des fins d'absorption uniquement.

Afin de bénéficier de bonnes performances d'insonorisation (isolation ou absorption), il est nécessaire de garantir une masse volumique contrôlée de la couche fibreuse en évitant notamment toute zone de sur-densification, correspondant à un écrasement excessif de la couche fibreuse qui perd alors son élasticité et/ou sa porosité.

Un procédé couramment utilisé pour réaliser la couche fibreuse, décrit par exemple dans les documents EP-0 896 079 ou EP-1 078 724, consiste à prévoir un flan de feutre, d'épaisseur et de masse volumique sensiblement constantes, ledit flan comprenant un liant fusible, par exemple sous forme de fibres, ledit flan étant conformée à chaud entre une matrice et un poinçon de sorte à obtenir la couche fibreuse.

Il peut être prévu en outre d'associer à la couche fibreuse des couches additionnelles (couche dense, couche poreuse,...) en fonction des propriétés attendues.

Dans ce type de procédé, le flan doit présenter une épaisseur supérieure ou égale à la plus grande épaisseur du matelas à obtenir. De ce fait, la masse volumique de la couche fibreuse obtenue varie en fonction de son épaisseur. En particulier, les zones de moindre épaisseur présentent la masse volumique la plus élevée, ce qui peut entraîner des phénomènes de sur-densification. Par ailleurs, Il apparaît un étirement de la couche fibreuse dans les zones les plus déformées du matelas, ce qui se traduit par une diminution de son épaisseur pouvant nécessiter de conférer une sur-épaisseur au flan initial afin de compenser ce phénomène.

Afin de remédier à ces inconvénients, il a été proposé, par exemple dans la demande de brevet FR-2 700 138, de réaliser une couche fibreuse de masse volumique sensiblement uniforme et d'épaisseur variable, par remplissage d'une cavité par aspiration d'un matériau fibreux commandée par un ensemble de clapets à ouverture séquentielle, ceci permettant d'assurer un remplissage sensiblement homogène. Ladite couche peut être ensuite comprimée à chaud afin de densifier le matériau, c'est à dire augmenter sa masse volumique, et lui donner la forme souhaitée.

Dans une telle réalisation, la pré-forme non comprimée obtenue par remplissage de la cavité ne peut prendre en compte que de façon approximative les variations d'épaisseurs du matelas à obtenir, ceci en raison de la difficulté à la maintenir en forme, notamment lors de sa compression, et ceci particulièrement dans les zones sensiblement verticales, c'est à dire celles dont la surface est parallèle au sens de pressage.

Il en résulte des difficultés à garantir une masse volumique contrôlée de la couche fibreuse, et notamment d'éviter les phénomènes de sur-densification.

L'invention a pour but de pallier ces inconvénients.

A cet effet, l'invention propose un procédé de réalisation d'un matelas comprenant une couche fibreuse thermo-liée, ledit procédé prévoyant un formage de ladite couche en deux étapes au moyen d'une première et d'une deuxième cavités formées en regard d'une même matrice non planaire, le volume de ladite deuxième cavité étant inférieur à celui de ladite première cavité et sa géométrie correspondant à celle du matelas à obtenir, ledit procédé comprenant les étapes suivantes :
- remplir la première cavité avec un mélange de matériaux fibreux de sorte à conférer audit mélange une première géométrie ;
- thermo-lier partiellement ledit mélange de matériaux fibreux, de sorte à assurer sensiblement le maintien des fibres entre elles lors de la formation de la deuxième cavité ;
- former la deuxième cavité ;
- achever le thermo-liage dudit mélange de matériaux fibreux, ledit mélange occupant sensiblement le volume de ladite deuxième cavité, de sorte à obtenir un matelas à la deuxième géométrie,
- refroidir ledit matelas avant retrait de ladite deuxième cavité.

La première cavité peut être remplie par aspiration du mélange de matériaux fibreux. Il peut être prévu que l'aspiration soit agencée de sorte que le mélange de matériaux fibreux présente une masse volumique sensiblement constante après remplissage de la première cavité, typiquement comprise entre 10 et 15 kg/m3. Il peut être utilisé à cette fin un dispositif tel que décrit dans la demande de brevet FR-2 700 138.

La masse volumique locale du matelas obtenu dépend alors uniquement du taux de compression (défini comme l'épaisseur initiale du mélange de matériaux fibreux divisée par son épaisseur finale) du mélange de matériaux fibreux à l'aplomb d'un point donné de sa surface.

Il est ainsi possible de prédire avec une certaine précision la masse volumique locale de la couche fibreuse en chaque point, et ceci d'autant plus que les fibres sont maintenues efficacement en place par le thermo-liage partiel des fibres, comme on le verra plus loin.

En particulier, il est possible de réaliser un matelas dont la couche fibreuse présente une masse volumique sensiblement homogène, par exemple de l'ordre de 50 kg/m3, conférant des propriétés d'élasticité intéressantes en isolation de type masse-ressort.

Il est de même possible de prévoir une masse volumique rehaussée dans les zones requérant une portance élevée, telles que les « caves à pieds » des garnissages de sol qui peuvent nécessiter une masse volumique de l'ordre de 90 kg/m3.

De la même façon, il peut être prévu d'augmenter localement la masse volumique de la couche fibreuse dans les zones du matelas comprenant des orifices destinés au passage d'organes fonctionnels tels que la colonne de direction, ceci afin de garantir un bon plaquage du matelas contre l'organe, et donc une bonne étanchéité acoustique.

Comme décrit ci-dessus, cette augmentation locale de masse volumique est obtenue par des sur-épaisseurs locales prévues dans la première cavité de formage du mélange de matériaux fibreux.

Le mélange de matériaux fibreux peut comprendre, outre des fibres structurelles, des éléments souples tels que des flocons de mousse souple recyclés et d'autres éléments recyclés.

Le liage des fibres entre elles à chaud peut être envisagé au moyen de fibres fusibles, à la température de chauffage du mélange de matériaux fibreux, incorporées dans le mélange.

Plusieurs paramètres concourent à éviter un déplacement intempestif des fibres au cours du procédé.

En premier lieu, la matrice, de géométrie analogue à celle de la face inférieure du matelas (face désignée comme telle car correspondant usuellement à la face destinée à être disposée contre la structure du véhicule automobile), est inchangée ce qui supprime une étape éventuelle de transfert du mélange de matériaux fibreux entre l'étape de remplissage de la première cavité et son formage définitif dans la deuxième cavité.

En second lieu, L'étape de thermo-liage partiel de la première géométrie, avant mise en place du deuxième poinçon, facilite l'introduction de ce dernier, notamment dans les zones sensiblement verticales, c'est à dire celles dont la surface est sensiblement parallèle à la direction de déplacement du deuxième poinçon, ceci sans provoquer d'entraînement non voulu des fibres.

La première et la deuxième cavités peuvent être formées par la matrice et respectivement un premier et un deuxième poinçons.

Selon une réalisation, le deuxième poinçon est obtenu par déformation d'un premier poinçon comprenant plusieurs parties mobiles actionnées, par exemple au moyen de vérins.

Le thermo-liage et le refroidissement de la couche fibreuse peuvent être réalisés typiquement par flux d'air porté à la température choisie, ceci par l'intermédiaire d'orifices prévus à cet effet dans la matrice et le deuxième poinçon.

Il peut être prévu en outre de disposer, en regard du deuxième poinçon et avant sa mise en place, une couche dense de sorte qu'elle s'associe à la couche fibreuse par fusion du liant contenu dans le mélange de matériaux fibreux.

Une telle couche dense peut par exemple être à base d'EPDM chargé avec une charge minérale telle que du carbonate de calcium.

La couche dense peut en outre être associée à une couche poreuse d'absorption acoustique, telle qu'un feutre, de sorte à obtenir un matelas dans lequel la couche dense est interposée entre la couche fibreuse et la couche poreuse, un tel matelas présentant des propriétés d'isolation et d'absorption acoustique.

En variante, la couche dense peut présenter elle même une porosité d'absorption acoustique, ce qui évite d'avoir à lui associer une couche poreuse.

Une telle couche dense peut par exemple être formée d'un feutre de faible porosité, par exemple dont la résistance au passage de l'air est de l'ordre de 1000 Nsm⁻³.

En particulier, la couche dense peut être réalisée par le procédé décrit ci-dessus. On peut ainsi disposer d'une couche dense dont la masse surfacique varie en fonction des zones du système masse-ressort. On peut alors moduler la répartition des masses surfaciques de la couche dense en fonction des caractéristiques acoustiques attendues dans chacune de ces zones. Cela permet de réduire la masse totale de la couche dense en optimisant la répartition des masses dans celle-ci. De plus, la fabrication de ce système est simplifiée, le procédé étant identique pour réaliser la couche fibreuse et la couche dense.

Afin de faciliter sa mise en forme, la couche dense peut être conformée, préalablement à sa mise en place, à la géométrie du deuxième poinçon, par exemple par thermoformage ou par injection, cette dernière technique permettant d'adapter l'épaisseur de la couche dense en fonction des caractéristiques locales de protection acoustique attendues.

Bien entendu, la présence de cette couche dense est facultative. En son absence, le matelas obtenu ne présente alors que des propriétés d'absorption acoustique.

On peut prévoir, en variante, d'associer la couche dense au matelas après son retrait de la deuxième cavité de moulage, par exemple par collage.

D'autres particularités et avantages de l'invention apparaîtront dans la description qui suit, faite en référence aux figures jointes dans lesquelles :
Les figures 1 à 6 représentent schématiquement en coupe les différentes étapes du procédé.
Les figures 7a et 7b représentent schématiquement en coupe les étapes complémentaires à celles représentées par les figures 1 à 6, permettant d'obtenir un matelas isolant de type masse-ressort selon un mode de réalisation.
Les figures 8a et 8b représentent schématiquement respectivement le détail en coupe d'une première et d'une deuxième cavité conduisant à une densification locale de la couche fibreuse du matelas à obtenir.
Les figures 9a et 9b représentent schématiquement le détail en coupe d'une zone d'un matelas monté sur véhicule, comprenant une couche dense et traversé par un organe fonctionnel, respectivement sans densification locale (9a) et avec densification locale (9b) de la couche fibreuse.

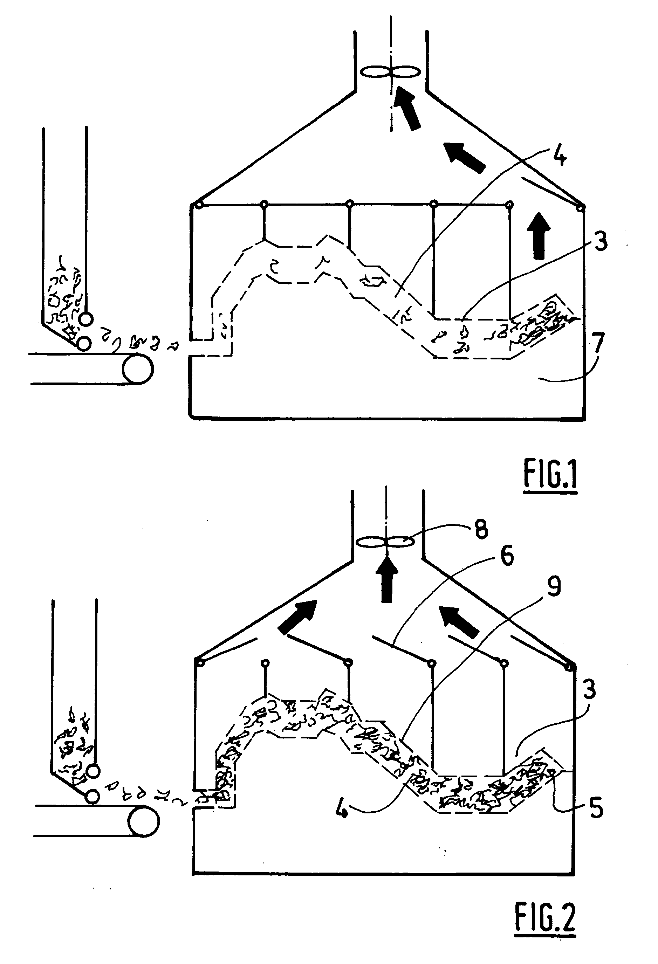

En référence aux figures 1 à 6, on décrit à présent les différentes étapes de réalisation d'un matelas 1.

Comme représenté en figure 1, on met d'abord en place un premier poinçon 3 de sorte à former avec une matrice 7 une première cavité 4.

Comme représenté en figure 2, on remplit la première cavité 4 par aspiration d'un mélange de matériaux fibreux 5, de sorte à conférer audit mélange une première géométrie dans un état non comprimé. Un système de clapets 6 à ouvertures séquentielles permet d'assurer un remplissage relativement homogène de la première cavité 4. L'aspiration est réalisée par une pompe 8 par l'intermédiaire d'orifices 9 prévus dans le premier poinçon 3.

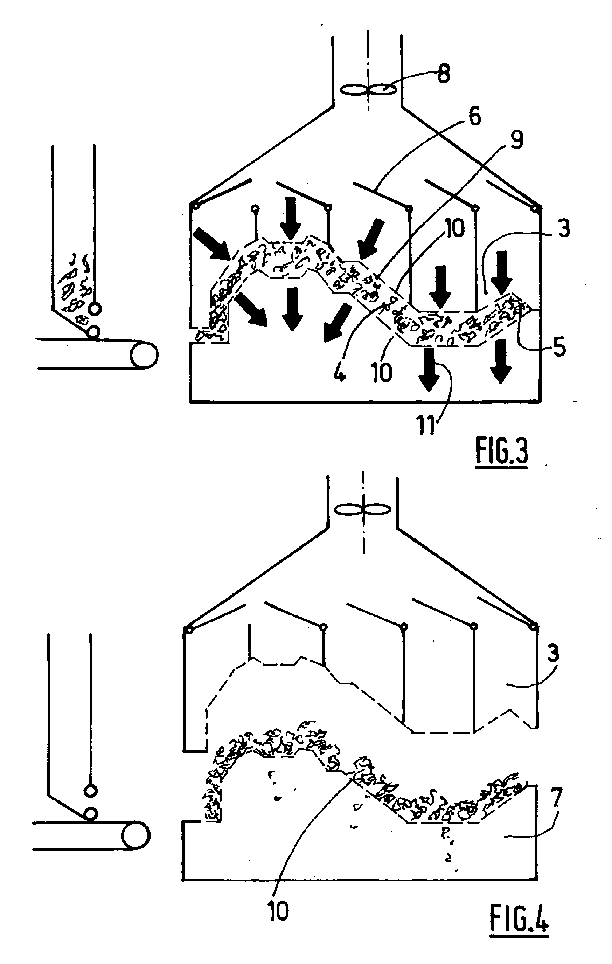

Comme représenté en figure 3, le mélange de matériaux fibreux 5 est alors partiellement thermo-lié, ceci par un flux d'air chaud symbolisé par les flêches 11, véhiculé au travers d'orifices 10 prévus à cet effet dans le premier poinçon 3 et la matrice 7. Cette étape a pour effet de lier partiellement entre elles les fibres du mélange de matériaux fibreux 5, ceci de sorte à éviter le déplacement ultérieur et non voulu des fibres lors de l'introduction du deuxième poinçon 12.

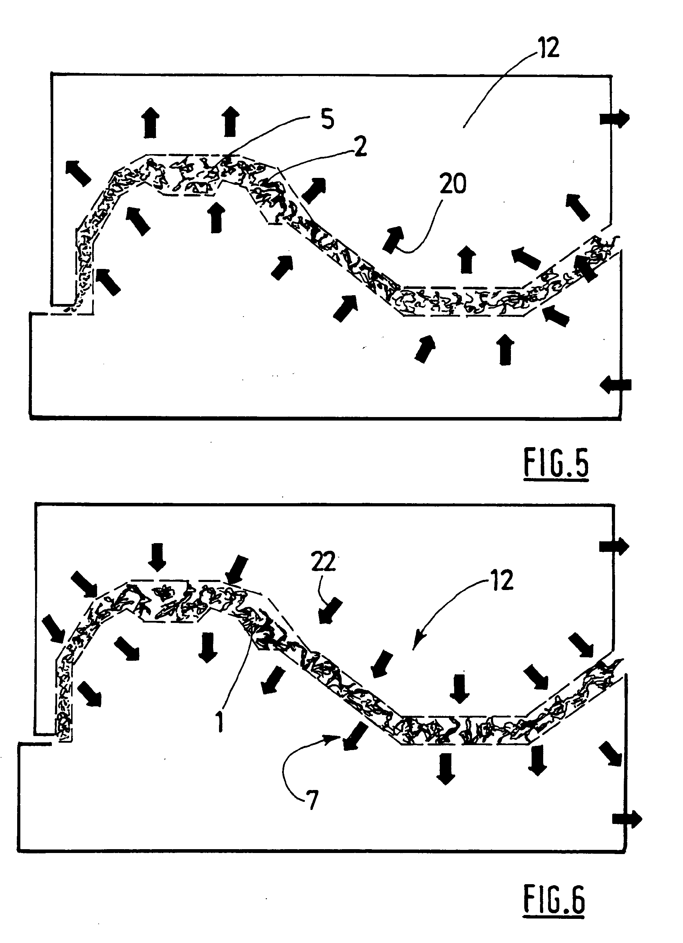

Comme représenté sur la figure 4, on procède alors au retrait du premier poinçon 3, la couche de matériau fibreux étant partiellement thermo-liée et conformée à la première géométrie.

Comme représenté en figure 5, on met alors en place le deuxième poinçon 12 de sorte à former la deuxième cavité 2 et on envoie un flux d'air chaud (flèches 20) de sorte à achever le thermo-liage du mélange de matériaux fibreux 5.

Comme représenté en figure 6, on procède au refroidissement par air froid (flèches 22) du matelas 1 avant retrait du deuxième poinçon 12 et démoulage.

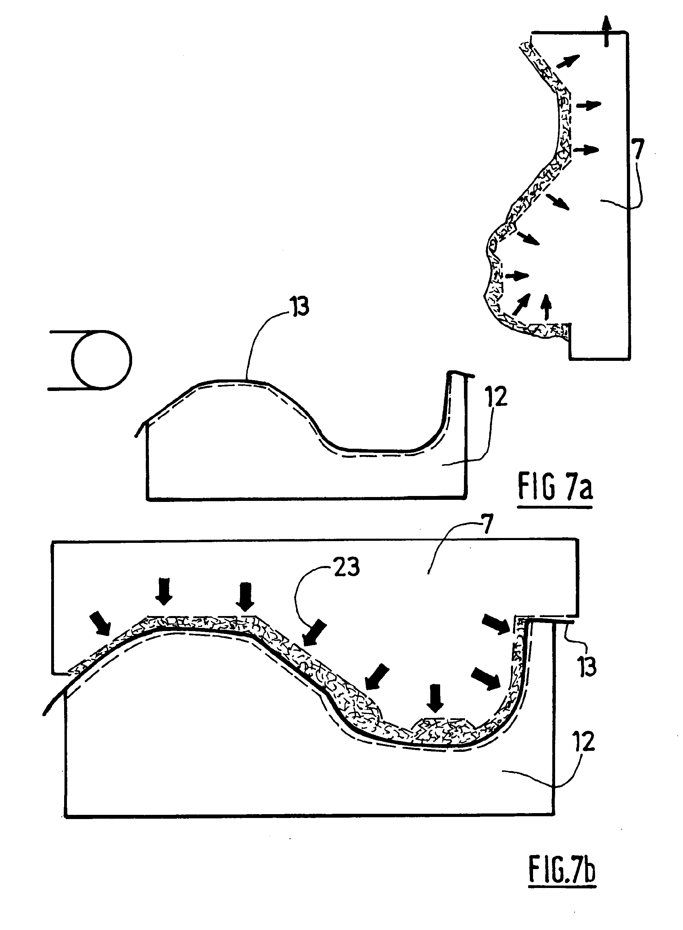

Afin d'obtenir un matelas 1 de type masse-ressort, on peut, comme représenté en figure 7a, garnir le deuxième poinçon 12 (représenté ici en dessous de la matrice 7), avant sa mise en place, d'une couche dense 13, éventuellement mise en forme au préalable, par exemple par thermoformage. Après mise en place du deuxième poinçon 12 en regard de la matrice 7, comme représenté en figure 7b, on procède au chauffage (flèches 23) de l'ensemble de sorte à thermo-lier le mélange de matériaux fibreux 5 et à l'associer à la couche dense 13. On pourrait, en variante, associer la couche 13 au matelas 1 après son retrait de la deuxième cavité.

Comme décrit précédemment, la couche dense 13 peut être revêtue d'une couche poreuse d'absorption acoustique, non représentée, ou présenter elle même une porosité d'absorption acoustique.

Comme indiqué précédemment, la couche dense 13 peut être réalisée par un procédé sensiblement identique à celui utilisé pour réaliser le matelas 1, en adaptant la répartition des masses surfaciques du matériau fibreux utilisé aux contraintes de protection acoustique en fonction des zones considérées.

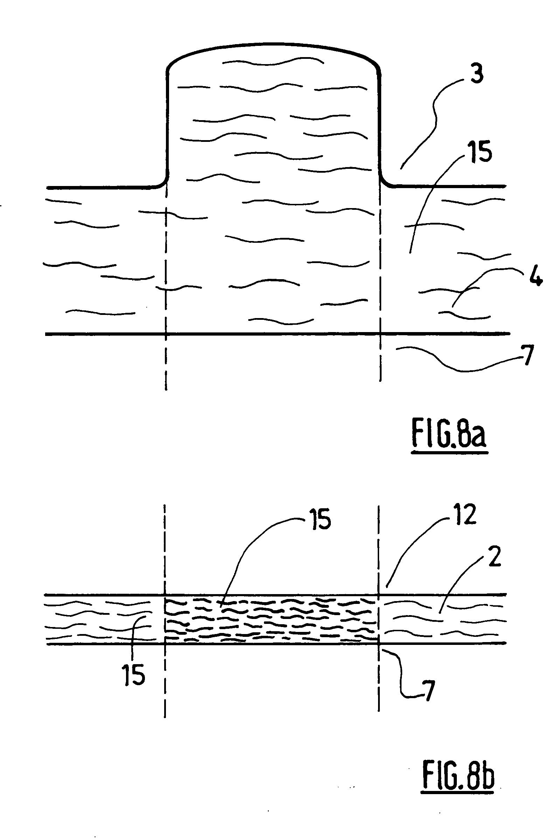

Les figures 8a et 8b illustrent respectivement le détail d'une première cavité 4 et d'une deuxième cavité 2 agencées entre elles de sorte à créer une densification locale 15 (zone comprise entre les pointillés) du mélange de matériaux fibreux 5.

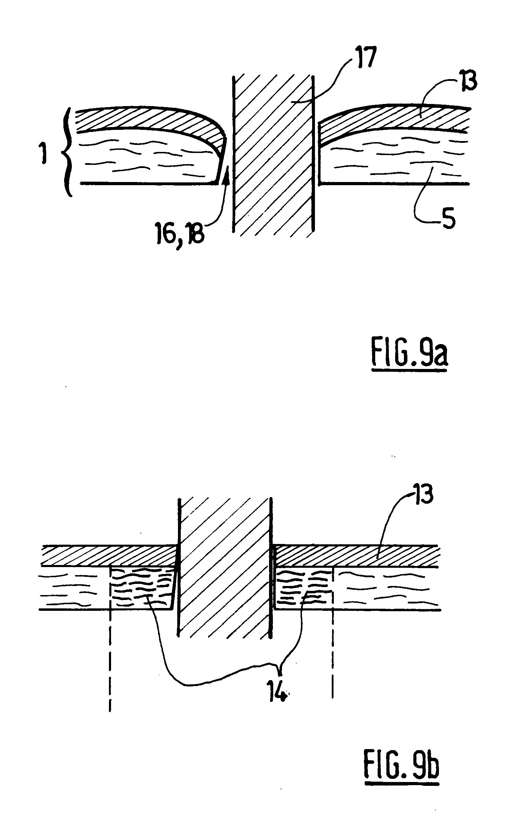

Une telle densification peut être utilisée en vue de limiter les fuites acoustiques 16 se produisant entre un matelas 1, comprenant une couche dense 13, et un organe fonctionnel 17 passant à travers un orifice 18 prévu dans le matelas 1. En l'absence de densification locale du mélange de matériaux fibreux 5, comme représenté en figure 9a, la couche dense 13 peut présenter une déformation propice au passage des ondes sonores. Le fait de densifier localement le mélange 5, comme représenté en figure 9b, en périphérie 14 de l'orifice, confère au mélange 5 une constante de ressort suffisante pour s'opposer à la déformation de la couche dense 13.

Comme évoqué précédemment, l'invention peut être utilisée pour réaliser d'autres produits que des matelas de protection acoustique, comme des matelassures d'assise ou de couchage dont on peut moduler localement la portance, de sorte à assurer un confort optimal.

## Revendications

1. Procédé de réalisation d'un matelas (1) comprenant une couche fibreuse thermo-liée, ledit procédé prévoyant un formage de ladite couche en deux étapes au moyen d'une première (4) et d'une deuxième (2) cavités formées en regard d'une même matrice (7) non planaire, le volume de ladite deuxième cavité étant inférieur à celui de ladite première cavité et sa géométrie correspondant à celle du matelas (1) à obtenir, ledit procédé comprenant les étapes suivantes :
• remplir la première cavité (4) avec un mélange de matériaux fibreux (5) de sorte à conférer audit mélange une première géométrie ;
• thermo-lier partiellement ledit mélange de matériaux fibreux, de sorte à assurer sensiblement le maintien des fibres entre elles lors de la formation de la deuxième cavité ;
• former la deuxième cavité (2);
• achever le thermo-liage dudit mélange de matériaux fibreux, ledit mélange occupant sensiblement le volume de ladite deuxième cavité, de sorte à obtenir un matelas (1) à la deuxième géométrie,
• refroidir ledit matelas avant retrait de ladite deuxième cavité.

2. Procédé selon la revendication 1, **caractérisé en ce que** le remplissage de la première cavité (4) est réalisé par aspiration du mélange de matériaux fibreux (5).

3. Procédé selon la revendication 1 ou 2, **caractérisé en ce que** le mélange de matériaux fibreux (5) présente une masse volumique sensiblement constante après remplissage de la première cavité (4).

4. Procédé selon l'une quelconque des revendications 1 à 3, **caractérisé en ce que** la première et la deuxième cavités (4, 2) sont formées par la matrice (7) et respectivement un premier et un deuxième poinçons (3, 12).

5. Procédé selon l'une quelconque des revendications 1 à 4, **caractérisé en ce qu'**il comprend en outre l'étape de disposer en regard du deuxième poinçon (12), lors de la formation de la deuxième cavité (2), une couche dense (13) de sorte qu'elle s'associe à la couche fibreuse par thermo-liage.

6. Procédé selon la revendication 5, **caractérisé en ce qu'**il prévoit d'associer à la couche dense (13), sur sa face opposée à celle recevant la couche de matériaux poreux (5), une couche poreuse d'absorption acoustique.

7. Procédé selon la revendication 5 ou 6, **caractérisé en ce que** la couche dense (13) est elle-même réalisée par un procédé selon l'une quelconque des revendications 1 à 4.

8. Procédé selon la revendication 5, **caractérisé en ce qu'**il prévoit que la couche dense (13) présente une porosité d'absorption acoustique.

9. Procédé selon l'une quelconque des revendications précédentes lorsqu'elles dépendent de la revendication 4, **caractérisé en ce que** la couche dense (13) est conformée, préalablement à sa mise en place, à la géométrie du deuxième poinçon (12).
